(19) Europäisches Patentamt

European Patent Office

Office européen des brevets

(11) **EP 1 728 762 A1**

(12) **EUROPEAN PATENT APPLICATION**

(43) Date of publication:
**06.12.2006 Bulletin 2006/49**

(51) Int Cl.:
*C01B 15/10* (2006.01)       *C11D 3/39* (2006.01)
*C11D 17/00* (2006.01)

(21) Application number: **05104767.8**

(22) Date of filing: **01.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(71) Applicant: **SOLVAY (Société Anonyme)
1050 Bruxelles (BE)**

(72) Inventors:
• **Venbrux, Henk L.J.
B-3080 Tervuren (BE)**
• **Söntgerath, Alfred
D-53547 Hausen (DE)**

• **Mathes, Manfred
D-53557 BAD HOENNINGEN 251 (DE)**
• **Rabe, Jürgen H.
D-56598 Rheinbrohl (DE)**
• **Hoffmann, Bernd
D-60529 Frankfurt (DE)**
• **Dung, Hans Dieter
D-53547 Dattenberg (DE)**

(74) Representative: **Vande Gucht, Anne et al
Solvay S.A.
Département de la Propriété Industrielle,
Rue de Ransbeek, 310
1120 Bruxelles (BE)**

(54) **Coated sodium percarbonate particles, process for their preparation, their use and detergent compositions containing them**

(57)    Coated sodium percarbonate particles containing a sodium percarbonate core at least partially surrounded by at least one coating layer containing a hygroscopic compound, said hygroscopic compound being present in an amount such that the coated sodium percarbonate particles are capable of absorbing an amount of water (measured at an initial water content of less than 0.5 % wt and after storage during 24 h at 32°C and 50% RH) which is increased, compared to the uncoated sodium percarbonate core particles, with at least 0.1 % of water per kg of coated sodium percarbonate particles.

EP 1 728 762 A1

**Description**

The present invention is related to coated sodium percarbonate particles presenting an increased capability of absorbing moisture without affecting the stability of the sodium percarbonate.

The use of sodium percarbonate (or sodium carbonate peroxyhydrate) as bleaching agent in detergent compositions for household fabric washing or dish washing is well known. Commonly such detergent compositions contain among other components zeolites as builder material, enzymes, bleach activators and/or perfumes. However, the interaction between sodium percarbonate and other formulation components leads to progressive decomposition of the percarbonate and hence to loss of bleaching power during storage and transportation of the composition. In addition, it is well known that the decomposition of sodium percarbonate is enhanced when it comes into contact with moisture or humidity. A number of proposals have been made to overcome this problem by interposing a layer between the sodium percarbonate and its environment, called a coating layer. For instance, in the British patent application GB 1538893 sodium sulphate is used as one of the constituents of the coating layer, and in the international application WO 96/14389 a magnesium salt is used. In the United States patent US 4526698 a borate is used. These known coating layers result already in an improved stability when the coated sodium percarbonate particles are used in a detergent formulation. However, this stability can still further be improved, especially when the product comes into contact with water.

The aim of the present invention is to provide new coated sodium percarbonate particles presenting an increased capability of absorbing water when they are stored as such or in a formulated product (conditions where it is difficult to avoid contact with water), without affecting the stability of the sodium percarbonate. Another purpose of the invention is to provide new coated percarbonate particles having a high dissolution rate when it is dissolved in water.

Consequently, the invention concerns coated sodium percarbonate particles containing a sodium percarbonate core at least partially surrounded by at least one coating layer containing a hygroscopic compound, said hygroscopic compound being present in an amount such that the coated sodium percarbonate particles are capable of absorbing an amount of water (measured at an initial water content of less than 0.5 % wt and after storage during 24 h at 32°C and 50 % RH) which is increased, compared to the uncoated sodium percarbonate core particles, with at least 0.1 % of water per kg of coated sodium percarbonate particles.

The hygroscopic compound can also absorb water at lower and higher relative humidities in the range of e.g. 30 to 70%. Typically at higher relative humidities the hygroscopic compound is able to absorb more water.

One of the essential characteristics of the present invention resides in the use of a hygroscopic compound in the coating layer. Indeed, it has been observed that by using a hygroscopic compound, the coating layer has a capacity of absorbing a certain amount of water from the surroundings (the atmosphere or the other ingredients present in the detergent formulations). It has further been observed that this water does not have a detrimental effect on the PCS stability, thereby allowing to store the sodium percarbonate for a long period without the necessity of controlling very strictly the storage conditions with respect to moisture.

The expression "hygroscopic compound" is intended to denote a compound which, when measured under exactly the same conditions as the sodium percarbonate core particles, absorbs more water than the sodium percarbonate core particles. The fact that the hygroscopic compound has a higher affmity for the absorption of water than sodium percarbonate avoids that the water absorbed by the hygroscopic compound from the surroundings is afterwards picked-up by the sodium percarbonate.

Suitable hygroscopic compounds are those capable of absorbing at least 1 % by weight of water, preferably at least 2 % by weight and most preferably at least 3 % by weight. Values of at least 5 % by weight, especially at least 6 % by weight give good results, those of at least 8 % by weight being the most advantageous. The amount of absorbed water is measured at an initial water content of less than 0.5% by weight, by storing the product in an open dish during 24 h at 50 % RH and 32 °C. In this test, the amount of absorbed water is weighed according to the Moisture Pick-Up (MPU) method described below.

Examples of hygroscopic compounds which can be used in the present invention are carbonates and borates. Examples of carbonates are alkali metal and alkali earth metal carbonates. Sodium carbonate is preferred, Anhydrous sodium carbonate is the most advantageous.

The amount of hygroscopic compound depends on its capacity to absorb water. Indeed, the higher this capacity, the less is needed to obtain the desired effect. This effect resides in that the coated sodium percarbonate particles are capable of absorbing an amount of water (measured at an initial water content of less than 0.5 % wt and after storage (in an open dish) during 24 h at 32°C and 50% RH) which is increased, compared to the uncoated sodium percarbonate core particles, with at least 0,1 % by weight, in some cases at least 0.12 % wt, especially at least 0.15 % wt and most preferably at least 0.19 % wt, of water per kg of coated sodium percarbonate particles. Values of at least 0.23 % by weight, especially at least 0.27 % wt give good results, those of at least 0.31 % wt being recommended, and those of at least 0.35 % wt being the most advantageous. The amount of absorbed water under these conditions is usually at most 6.3 % by weight, in particular at most 4.5 % by weight, and preferably at most 3.6 % by weight.

The amount of absorbed water (also called "moisture pick-up") of sodium percarbonate particles is measured in a test conducted in a humidity chamber at 50 % relative humidity and 32 °C after 24 hours. The moisture pick-up is the extent/rate at which the product picks up moisture from a humid atmosphere. This capability to pick up moisture is measured by the following test : a 9 cm diameter Petri dish with a 1 cm depth rim and lid is weighed accurately on a 4 decimal place balance, (W1). A sample of dry sodium percarbonate (about 5 g) is placed on the Petri dish which is gently agitated to generate an even particulate layer across the base of the dish and reweighed on the same balance including the lid, (W2). The sample on the open Petri dish is stored in a room, about 2,5 m high, wide and long in an atmosphere maintained for a period of 24 hours at 32 °C by a thermostat controlled heater and at 50 % Relative Humidity (RH) by introduction of a fine droplet water spray under the control of a humidity detector, and weighed on the same balance, (W3). The samples are protected by a shield from the spray. The moisture pick-up is calculated as follows:

$$\text{Moisture Pick-up (g/kg)} = 1000 \times (W3 - W2) / (W2 - W1).$$

"Dry sodium percarbonate" is intended to denote sodium percarbonate which has been dried until its moisture content is below 0,5 % by weight (using a Halogen dryer METTLER HR73 equipment, in which a cooled sample of about 7,5 g is placed on an aluminum dish, the sample is continuously weighed and dried at 85°C until the weight is constant (maximum weight loss of 1 mg in 90 s). The drying can be done for instance in a fluid bed drier having a diameter of 15 cm, during 15 to 30 min, for 2 kg of product, at a temperature of 70 to 75 ° C and an air flow of 100 to 150 m$^3$/h. After the 24 hour storage, the sample is covered with the lid and removed from the humidity chamber. The sample has to be weighed within 5 min and at ambient conditions (temperature of 23 °C and relative humidity of 46-49 %).

The coating layer present in the coated sodium percarbonate particles of the present invention represents in general more than 3 % by weight of the coated sodium percarbonate particles, in particular at least 5 % by weight and most preferably at least 6 % by weight. Values of at least 7 % by weight, especially at least 8 % by weight give very good results, those of at least 9 % by weight being the most advantageous. The coating layer represents in many cases at most 70 % by weight of the coated sodium percarbonate particles, especially at most 50 % by weight, and most often at most 40 % by weight. Amounts of more than 3 and up to 60 % by weight, especially from 7 to 40 % by weight, are suitable.

Other properties of the coated sodium percarbonate particles of the invention are described hereafter.

The coated sodium percarbonate particles from the invention have an increased specific surface area compared with uncoated (typically 0.35 m$^2$/g) and other coated percarbonates. The specific surface area is generally at least 0.4 m$^2$/g, in particular at least 0.5 m$^2$/g, preferably at least 0.6 m$^2$/g. Typically it is as most 1.1 m$^2$/g. The specific area is measured by determining the quantity of a gas that adsorbs as a single layer of molecules, a so-called monomolecular layer, on a sample. Under specific conditions, the area of the sample is thus directly calculable from the number of adsorbed molecules and the area occupied by each. The change in composition of a helium/nitrogen gas mixture after adsorption of nitrogen on the sample is detected by the change in thermal conductivity of the gas. This is the so-called BET method of the ISO standard 9277 of the year 1995.

Based on the increased specific surface the coated sodium percarbonate particles of the present invention can also better absorb than uncoated sodium percarbonate or other coated sodium percarbonates one or more surfactants and/or perfumes in such a way that the outer surface of the coated sodium percarbonate particles and optionally the inner surface of the pores in the coating layer are at least partially covered with said surfactants and/or perfumes.

The coated sodium percarbonate particles of the present invention can contain in the coating layer a small amount of sulfate which does not exceed 60 % by weight, in particular 30 % by weight and preferably 10 % by weight, of the weight of the coating layer.

The sodium percarbonate core particles of the present invention can consist essentially of sodium percarbonate. They can contain sodium carbonate in an amount which usually does not exceed 15 % by weight of the core particles, and/or they contain additives the amount of which usually does not exceed 2 % by weight of the core particles. In a variant, the sodium percarbonate core particles can contain up to 4 % by weight of a salt (such as sodium chloride), up to 10 % by weight of sodium carbonate, and up to 4 % by weight of additives. The additives can be stabilizers selected from inorganic stabilizers (such as alkali and soluble alkaline earth metal silicates) or organic stabilizers (such as polycarboxylate or polyphosphonate salts, as such or in acid form, for example polyaminocarboxylates like EDTA or DTPA, or polyaminomethylene-phosphonates like EDTMPA, CDTMPA or DTPMPA, or hydroalkylenephosphonates like hydroxyethylidenediphosphonate) or from mixtures of the above.

The sodium percarbonate core particles of the present invention generally have a mean diameter of at least 300 $\mu$m, in particular at least 400 $\mu$m, and more particularly at least 500 $\mu$m, values of at least 600 $\mu$m being especially advantageous. The mean diameter of the sodium percarbonate core particles is usually at most 1600 $\mu$m, especially at most 1400 $\mu$m, values of at most 1000 $\mu$m being the most common, for instance at most 900 $\mu$m.

According to the present invention, the sodium percarbonate core particles are surrounded by at least one coating layer. This means that the surface of the sodium percarbonate core particles has been treated, at least once, by contacting it with a coating agent or with a mixture of coating agents, so that a layer of that coating agent or mixture is deposited onto the surface of the core particles. It is recommended to have a coating layer as uniform and homogeneous as possible having all around the surface of the core particle a homogeneous chemical structure, a homogeneous thickness with as less holes as possible. The function of this coating layer is to protect the core material from contact with the environment and especially from contact with humidity present in the environment which enhances the decomposition of the core material.

The coating agent used in the present invention contains at least one hygroscopic compound as defined above. It can also contain other coating agents different from the hygroscopic compound, which can be chosen from all suitable organic or inorganic coating agents. Inorganic coating agents give good results. The inorganic coating agents can be one or more materials selected from alkali metal and/or alkaline earth metal (particularly sodium or magnesium) salts of mineral or other inorganic acids. Typical examples include sulfate, carbonate, bicarbonate, phosphate and/or polymeric phosphates, silicates, borates and the corresponding boric acids. Particular combinations of coating agents include carbonate/silicate, and boric acid or borate with sulfate and the combination of a) sulfate, carbonate, carbonate/sulfate, bicarbonate, boric acid, borate, boric acid/sulfate, or borate/sulfate, with b) silicate. Preferably, the inorganic coating agent contains sodium silicate, sodium borate, boric acid, sodium carbonate, sodium sulfate, magnesium sulfate or one of their mixtures.

The coated sodium percarbonate particles of the present invention generally have a mean particle size of at least 300 $\mu$m, in particular at least 400 $\mu$m, and more particularly at least 500 $\mu$m, values of at least 600 $\mu$m being especially advantageous. The mean particle size is at most 1600 $\mu$m, especially at most 1400 $\mu$m, values of at most 1000 $\mu$m being the most common, for instance at most 900 $\mu$m.

The mean particle size of particles is measured using a sieve set (containing at least 6 sieves of known sieve aperture) to obtain several fractions and weighing each fraction. The mean particle size in $\mu$m (MPS) is then calculated according to the formula

$$MPS = 0.005 \sum_{i=0}^{n} \left[ m_i \left( k_i + k_{i+1} \right) \right]$$

in which n is the number of sieves (not including the sieve pan), $m_i$ is the weight fraction in % on sieve i and $k_i$ is the sieve aperture in $\mu$m of sieve $i$. The index i increases with increasing sieve aperture. The sieve pan is indicated with the index 0 and has an aperture of $k_0 = 0 \mu m$ and $m_0$ is the weight retained in the sieve pan after the sieving process. $k_{n+1}$ equals to 1800 $\mu$m and is the maximum size considered for the MPS calculation. A typical sieve set which gives reliable results is defined as follows : n = 6; $k_6$ = 1400 $\mu$m; $k_5$ = 1000 $\mu$m; $k_4$ = 850 $\mu$m; $k_3$ = 600 $\mu$m; $k_2$ = 425 $\mu$m; $k_1$ = 150 $\mu$m.

The coated sodium percarbonate particles have good intrinsic stability which is expressed as heat output measured at the end of a period of 20h during which 1 g of the product has been kept at 40 °C in a closed ampoule of 3.5 ml. The heat output is typically at most 5 $\mu$W/g, in particular at most 4 $\mu$W/g, preferably at most 3 $\mu$W/g, most preferably at most 2 $\mu$W/g

The coated sodium percarbonate particles of the invention have a good stability, and especially a good long term stability. This long term stability can be expressed in two different ways. According to the first way, it is expressed as heat output at 40 °C measured after storage of 1 g of the product during 12 weeks at 40 °C in a closed ampoule of 3,5 ml. The measurement of heat output by microcalorimetry consists of using the heat flow or heat leakage principle using a LKB2277 Bio Activity Monitor. The heat flow between an ampoule containing the coated sodium percarbonate particles and a temperature controlled water bath is measured and compared to a reference material with a known heat of reaction. This long term stability is generally less than 5 $\mu$W/g, in particular less than 4 $\mu$W/g, preferably less than 3 $\mu$W/g, and most preferably less than 2 $\mu$W/g.

According to the second way, the long term stability is expressed as the Avox (or available oxygen content) recovery after storage of 1 g of the product for 8 weeks at 55 °C in a closed ampoule of 3,5 ml. The Avox recovery corresponds to the difference between the available oxygen content before and after the storage expressed as percentage of the initial available oxygen content. The available oxygen content is measured as explained below. This Avox recovery is in many cases at least 70 %, especially at least 75 %, values of at least 80 % being very suitable, those of at least 85 % being preferred.

The coated sodium percarbonate particles of the invention have usually a content of available oxygen of at least 12,0 % by weight, in particular at least 13,0 % by weight, contents of at least 13,5 % by weight being particularly satisfactory. The content of available oxygen is generally at most 15,0 % by weight, in particular at most 14,0 %, for instance at most 14,4 %. The content of available oxygen is measured by titration with potassium permanganate after dissolution in sulfuric acid (see ISO standard 1917-1982).

The coated sodium percarbonate particles of the present invention usually have a 90 % dissolution time of at least 0,1 min, in particular at least 0,5 min. Generally, the 90 % dissolution time is at most 3 min, especially at most 2 min. The 90 % dissolution time is the time taken for conductivity to achieve 90 % of its fmal value after addition of the coated sodium percarbonate particles to water at 15 °C and 2 g/l concentration. The method used is adapted from ISO 3123-1976 for industrial perborates, the only differences being the stirrer height that is 10 mm from the beaker bottom and a 2 liter beaker (internal diameter 120 mm).

The coated sodium percarbonate particles of the present invention usually have a bulk density of at least 0,8 g/cm$^3$, in particular at least 0,9 g/cm$^3$. It is generally at most 1,2 g/cm$^3$, especially at most 1,1 g/cm$^3$. The bulk density is measured by recording the mass of a sample in a stainless steel cylinder of internal height and diameter 86,1 mm, after running the sample out of a funnel (upper internal diameter 108 mm, lower internal diameter 40 mm, height 130 mm) placed 50 mm directly above the cylinder.

The coated sodium percarbonate particles of the invention usually have an attrition measured according to the ISO standard method 5937-1980 of at most 10 %, in particular at most 8 %, especially at most 4 %. The attrition is in most cases at least 0,05 %.

The coated sodium percarbonate particles of the invention generally have an in-detergent stability of at least 60 % Avox recovery, in particular at least 65 %. The in-detergent stability is often at most 95 % Avox recovery, especially at most 85 %. The in-detergent stability is measured as follows : a detergent composition is prepared by dry mixing 15 % by weight of coated sodium percarbonate particles with 85 % by weight of a base detergent composition containing zeolite A (Na) called IECA* base in an amount of about 35 % by weight. Samples (50 g) of the blended composition are transferred into polyethylene-coated cartons which were sealed and the cartons stored in a temperature and humidity controlled cabinet at 32 °C, 80 % relative humidity for 6 weeks. The available oxygen content (Avox) of the composition was measured at the beginning and at the end of the storage period, using a standard potassium permanganate titration method and the Avox remaining at the end expressed as a percentage of its starting value is calculated.

The coated sodium percarbonate particles of the present invention can be prepared by any adequate method which allows the coating of core particles with a coating material containing a hygroscopic compound.

The present invention is therefore also related to a process for producing the above-described coated sodium percarbonate particles. The process according to the present invention comprises :

(a) a manufacturing step of the sodium percarbonate core particles,
(b) a drying step of the so obtained sodium percarbonate core particles, optionally carried out simultaneously with step (a),
(c) a coating step of the so obtained dry sodium percarbonate core particles with at least one coating material containing the hygroscopic compound,
(d) a drying step of the so obtained coated sodium percarbonate particles, optionally carried out simultaneously with step (c).

The first step (a) for the manufacture of sodium percarbonate core particles can be carried out by any known process for the preparation of sodium percarbonate core particles. According to a first option, step (a) can be a liquid crystallization process , in which a solution of sodium carbonate is mixed with a solution of hydrogen peroxide and the formed sodium percarbonate is precipitated into sodium percarbonate core particles, for instance by lowering the temperature and/or by adding salting out agents. The sodium percarbonate core particles are separated from the liquid by for example centrifugation or filtration. An example of such a liquid crystallization process is described in the international application WO 97/35806 of SOLVAY INTEROX.

According to a second option, step (a) uses a fluid bed granulation process, in which a solution of sodium carbonate and a solution of hydrogen peroxide are sprayed onto a bed of sodium percarbonate seeds which is fluidized with the aid of a fluidizing gas, the carbonate and the hydrogen peroxide react on the surface of the seed particles, the seed particles thereby grow into sodium percarbonate core particles. An example of such a fluid bed granulation process is described in GB 1300855 of SOLVAY.

According to a third option, step (a) can be a direct process by reaction of a hydrogen peroxide solution with solid sodium carbonate and/or bicarbonate. An example of such a direct process is described in the United States patent US 6054066 of SOLVAY INTEROX GmbH.

According to a fourth option, step (a) contains two consecutive preparation steps, the first being carried out according to the liquid crystallization process and the second according to the fluid bed granulation process. This means that step (a) is carried out by mixing a sodium carbonate source with a solution of hydrogen peroxide and by precipitating the formed sodium percarbonate into sodium percarbonate particles, followed by spraying onto these particles a sodium carbonate solution and a hydrogen peroxide solution in a fluid bed spray granulator in order to form the sodium percarbonate core particles.

The sodium percarbonate core particles obtained according to the first option of step (a) (liquid crystallization process) contain commonly more than 1 % by weight of water, the water content being generally up to 15 % by weight. The core particles obtained according to the second option (fluid bed granulation process) contain in general less than 1,5 % by weight of water, in particular less than 1 % by weight of water, a water content of at most 0,8 % by weight being most preferred. The core particles obtained according to the third option (direct process) contain typically between 0,1 and 25 % by weight of water.

The water content of sodium percarbonate particles is measured, in the framework of the present invention, according to the following method : a sample is heated and the amount of liberated water is measured by the METTLER method described above but then at 60 oC.

The drying step (b) of the process of the present invention can be a distinct step from step (a) or can be carried out simultaneously with step (a) in the same equipment. When step (a) is carried out according to the first option (liquid crystallization process), then the drying step (b) can be done in any reactor such as in a fluid bed drier, in a rotating drum drier, in an oven or in a circulating air oven. A fluid bed drier, in which the sodium percarbonate core particles are fluidized by an upward flow of fluidizing gas (such as air, preferably hot air), is preferred. Typical temperatures of the hot air are from 50 to 210 °C, especially from 100 to 160 °C.

If step (a) is carried out according to the second option (fluid bed granulation process), the drying (b) is usually done in the same fluid bed reactor as the one used in step (a). Drying is then simultaneously carried out with step (a). Typical temperatures of the fluidizing gas are from 50 to 210 °C, especially from 100 to 160 °C.

When step (a) is carried out according to the third option (direct process), the drying (b) can be done in any reactor such as a rotating drum drier, an oven, a circulating air oven or a fluid bed reactor which can be the same as the fluid bed reactor used in step (a). Typical temperatures of the fluidizing gas are from 50 to 210 °C, especially from 100 to 160 °C.

The dried sodium percarbonate core particles obtained in step (b) contain in general less than 1,5 % by weight of water, in particular less than 1 % by weight of water, a water content of at most 0,8 % by weight being most preferred.

The coating step (c) of the process of the present invention can be carried out by any adequate coating process which allows bringing the dried sodium percarbonate core particles in contact with the coating agent. Any type of mixer or fluid bed reactor can be used for this purpose as coating equipment. When at least two, especially at least three consecutive coating steps are carried out, mixers and fluid bed reactors can be combined, for instance first a coating step in a mixer followed by a second coating step in a fluid bed reactor. Suitable mixers are those containing a mixing drum with rotating tools such as those of the LOEDIGE type.

In step (c), the coating agent can be used in the form of a solution (preferably an aqueous solution) or in the form of a slurry, or else in powder form. The use of a coating agent in powder form is described in the international application WO 01/62663 of SOLVAY (Société Anonyme). The coating agent can also contain small sodium percarbonate particles of a mean particle size smaller than 100 $\mu$m as described in the patent application filed as EP 04103014.9 of SOLVAY (Société Anonyme). Solutions of the coating agent are preferred, especially aqueous solutions.

During step (c), it is recommended to have a minimum amount of moisture present in the system to allow to bind the coating layer onto the surface of the core particles. This moisture can already be present inside the sodium percarbonate core particles. It can also be added as the diluent of the aqueous solution or slurry of the coating agent or else it can be added as such. In the case of coating in a mixer, the moisture content is usually at least 2 % by weight of the weight of the dried sodium percarbonate core particles, in particular at least 3 % by weight, preferably at least 5 % by weight. The moisture content can go up to 30 % by weight of the weight of the dried sodium percarbonate core particles, especially up to 20 % by weight, in most cases up to 15 % by weight. In the case of coating in a fluid bed reactor, the moisture content can be lower.

Step (c) of the process of the invention is generally carried out at a temperature of at least 20 °C. The temperature is in many cases at most 100 °C, and especially at most 90 °C.

The drying step (d) of the process of the invention can be carried out under similar conditions as the drying step (b). When the coating step (c) is carried out in a fluid bed reactor, then the drying step (d) is preferably carried out simultaneously with the coating step (c) in the same fluid bed equipment.

The coated sodium percarbonate particles of the present invention can advantageously be used as bleaching agent in detergent compositions, especially for household fabric washing or dish washing and other household cleaning compositions such as bleach boosters and stain removers.

The present invention therefore concerns also the use of the above described coated sodium percarbonate particles as bleaching agent in detergent and/or other household cleaning compositions.

The present invention also concerns detergent compositions containing the above described coated sodium percarbonate particles. They can also contain a builder, either zeolitic or non-zeolitic (such as phosphate builders). Other possible constituents of the detergent compositions can be surfactants, antiredeposition and soil suspension agents, bleach activators, optical brightening agents, soil release agents, suds controllers, enzymes, fabric softening agents, perfumes, colours and processing aids. The detergent compositions can take the form of powders, granules, tablets and liquids. The powders and granules have preferably a bulk density of 0,2 to 1,4 g/cm$^3$.

Example 1

Sodium percarbonate core particles were prepared in a continuous crystallization process using NaCl as salting out agent in the presence of a crystal modifier (poly-acrylate). The crystallization reactor was filled with mother liquor at a temperature between 15 and 25 °C. Solid sodium carbonate was added thereto as well as a 59.5 % wt aqueous hydrogen peroxide solution. The reactor was continuously stirred and cooled at a temperature of 18 °C. The mother liquor in the crystallizer had the following composition: 216 g NaCl/1, $H_2O_2$ 20 g/l and $Na_2CO_3$ 60 g/l.

The formed sodium percarbonate core particles were continuously withdrawn from the reactor and transferred into a buffer tank and then into a discontinuous centrifuge. The sodium percarbonate core particles leaving the centrifuge were dried in a fluid bed dryer at a bed temperature of 62 °C with an air flow of 2.4 Nm$^3$/kg dry sodium percarbonate fed to the fluid bed. The fluidization air was heated ambient air.

The so obtained uncoated sodium percarbonate core particles with a mean particle size of 829 $\mu$m and a span of 1, heat output of 1.9 microW/g at 20h were transferred to the coating sector to be coated with 9% sodium carbonate coating.

The coating solution used to apply the sodium carbonate coating to the PCS core particles was a 27.6% sodium carbonate solution. About 30% of the sodium carbonate coating solution was applied by spraying the coating solution into a Loedige Mixer (Type CB40 with 5 feed elements, 39 mixing elements and 13 transport elements rotating at a speed of 960 rpm) which was fed at the same time with uncoated sodium percarbonate.

The obtained mixture was transferred into a fluid bed. At the same time the other 70% of the sodium carbonate coating solution was sprayed into this fluid bed. The carbonate solution was sprayed by means of two-component spray nozzles in which the solution was atomized with pressurized air. The atomization air consumption was 0.30 Nm$^3$/l coating solution.

The fluid bed was heated with heated ambient air to a bed temperature of 79 °C by means of an air flow of 9.6 Nm$^3$/kg uncoated sodium percarbonate fed to the fluid bed.

The coated product leaving the coating fluid bed was cooled to 30 °C with conditioned air with a relative humidity of 13% at 30 °C.

The so obtained coated sodium percarbonate particles have a mean particle size of 702 $\mu$m, a span of 1 and a heat output of 1.2 microW/g after 20h.

After the MPU test at 50% RH and 32 oC for 24 hours the heat output of the coated sodium percarbonate was 1.9 $\mu$W/g after 20h.

**Claims**

1.  Coated sodium percarbonate particles containing a sodium percarbonate core at least partially surrounded by at least one coating layer containing a hygroscopic compound, said hygroscopic compound being present in an amount such that the coated sodium percarbonate particles are capable of absorbing an amount of water (measured at an initial water content of less than 0.5 % wt and after storage during 24 h at 32°C and 50% RH) which is increased, compared to the uncoated sodium percarbonate core particles, with at least 0.1 % of water per kg of coated sodium percarbonate particles.

2.  Coated sodium percarbonate particles according to claim 1, in which the hygroscopic compound is chosen from carbonates and borates.

3.  Coated sodium percarbonate particles according to claim 2, in which the hygroscopic compound is anhydrous sodium carbonate.

4.  Coated sodium percarbonate particles according to any one of claims 1 to 3, in which the at least one coating layer represents more than 3 and up to 70 % by weight of the coated sodium percarbonate particles, in particular from 7 to 40 % by weight.

5.  Coated sodium percarbonate particles according to any one of claims 1 to 4 which allows to absorb one or more surfactants and/or perfumes in such a way that the outer surface of the coated sodium percarbonate particles and optionally the inner surface of the pores in the coating layer are at least partially covered with said surfactants and/or perfumes.

6. Coated sodium percarbonate particles according to any one of claims 1 to 5, in which the coating layer contains a small amount of sulfate which does not exceed 60 % by weight of the weight of the coating layer.

7. Process for preparing the coated sodium percarbonate particles of any one of claims 1 to 6, comprising :

   (a) a manufacturing step of the sodium percarbonate core particles,
   (b) a drying step of the so obtained sodium percarbonate core particles, optionally carried out simultaneously with step (a),
   (c) a coating step of the so obtained dry sodium percarbonate core particles with at least one coating material containing the hygroscopic compound,
   (d) a drying step of the so obtained coated sodium percarbonate particles, optionally carried out simultaneously with step (c).

8. Process according to claim 7, in which step (a) is carried out by mixing a sodium carbonate source with a solution of hydrogen peroxide and by precipitating the formed sodium percarbonate into sodium percarbonate core particles.

9. Process according to claim 8, in which step (a) is carried out by mixing a sodium carbonate source with a solution of hydrogen peroxide and by precipitating the formed sodium percarbonate into sodium percarbonate particles, followed by spraying onto these particles a sodium carbonate solution and a hydrogen peroxide solution in a fluid bed spray granulator in order to form the sodium percarbonate core particles.

10. Process according to claim 7, in which step (a) is carried out in a fluid bed granulation reactor by spraying a solution of sodium carbonate and a solution of hydrogen peroxide onto a bed of sodium percarbonate seeds which is fluidized with the aid of a fluidizing gas.

11. Process according to any one of claims 7 to 10, in which step (c) is carried out in a mixer or in a fluid bed reactor or consecutively in a mixer and in a fluid bed reactor.

12. Process according to claim 11, in which step (c) is carried out in a mixer and comprises at least two, especially three, consecutive coating steps.

13. Use of the coated sodium percarbonate particles of any one of claims 1 to 6 as bleaching agent in detergent and/or other household cleaning compositions.

14. Detergent and/or other household cleaning compositions containing the coated sodium percarbonate particles of any one of claims 1 to 6.

**European Patent Office**

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 5 902 682 A (BERTSCH-FRANK ET AL) 11 May 1999 (1999-05-11) * column 8, line 12 - column 9, line 39; claim 7; tables 1,2 * | 1-14 | C01B15/10 C11D3/39 C11D17/00 |
| X | EP 0 623 553 A (MITSUBISHI GAS CHEMICAL COMPANY, INC) 9 November 1994 (1994-11-09) * examples 6,7,9 * | 1-14 | |
| D,X | WO 96/14389 A (EKA NOBEL AB; LAGNEMO, HANS; JIGSTAM, MONICA) 17 May 1996 (1996-05-17) * examples 1,3 * | 1-14 | |
| X | EP 0 962 424 A (SOLVAY) 8 December 1999 (1999-12-08) * the whole document * | 1-5,7-14 | |
| D,X | GB 1 538 893 A (INTEROX) 24 January 1979 (1979-01-24) * page 3, line 42 - page 4, line 28 * | 1-11,13, 14 | |
| D,A | GB 1 300 855 A (SOLVAY) 20 December 1972 (1972-12-20) * example 1 * | 8,9 | TECHNICAL FIELDS SEARCHED (Int.Cl.7) C01B C11D |
| A | CA 2 170 599 A1 (DEGUSSA AKTIENGESELLSCHAFT) 9 March 1995 (1995-03-09) * claim 1 * | 8-10 | |

The present search report has been drawn up for all claims

| Place of search | Date of completion of the search | Examiner |
|---|---|---|
| The Hague | 21 October 2005 | Engelen, K |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 728 762 A1**

## ANNEX TO THE EUROPEAN SEARCH REPORT
## ON EUROPEAN PATENT APPLICATION NO.

EP 05 10 4767

21-10-2005

| Patent document cited in search report | | | Publication date | Patent family member(s) | | | Publication date |
|---|---|---|---|---|---|---|---|
| US 5902682 | A | | 11-05-1999 | NONE | | | |
| EP 0623553 | A | | 09-11-1994 | DE | 69404543 | D1 | 04-09-1997 |
| | | | | DE | 69404543 | T2 | 04-12-1997 |
| | | | | US | 5462804 | A | 31-10-1995 |
| WO 9614389 | A | | 17-05-1996 | AT | 191744 | T | 15-04-2000 |
| | | | | AT | 167895 | T | 15-07-1998 |
| | | | | AT | 173293 | T | 15-11-1998 |
| | | | | AU | 3689895 | A | 31-05-1996 |
| | | | | AU | 3689995 | A | 02-05-1996 |
| | | | | BR | 9509230 | A | 27-01-1998 |
| | | | | BR | 9509231 | A | 27-01-1998 |
| | | | | BR | 9509491 | A | 14-10-1997 |
| | | | | CA | 2199132 | A1 | 17-05-1996 |
| | | | | CA | 2199133 | A1 | 18-04-1996 |
| | | | | CZ | 9700920 | A3 | 16-07-1997 |
| | | | | CZ | 9701053 | A3 | 16-07-1997 |
| | | | | CZ | 9701356 | A3 | 13-08-1997 |
| | | | | DE | 69503254 | T2 | 21-01-1999 |
| | | | | DE | 69505997 | D1 | 17-12-1998 |
| | | | | DE | 69516299 | D1 | 18-05-2000 |
| | | | | DE | 69516299 | T2 | 14-09-2000 |
| | | | | DK | 789748 | T3 | 09-10-2000 |
| | | | | EP | 0789748 | A1 | 20-08-1997 |
| | | | | EP | 0785982 | A1 | 30-07-1997 |
| | | | | EP | 0784667 | A1 | 23-07-1997 |
| | | | | ES | 2145302 | T3 | 01-07-2000 |
| | | | | ES | 2125663 | T3 | 01-03-1999 |
| | | | | FI | 971350 | A | 02-04-1997 |
| | | | | FI | 971808 | A | 28-04-1997 |
| | | | | HU | 77714 | A2 | 28-07-1998 |
| | | | | JP | 10507220 | T | 14-07-1998 |
| | | | | JP | 2963769 | B2 | 18-10-1999 |
| | | | | JP | 10508629 | T | 25-08-1998 |
| | | | | KR | 207150 | B1 | 15-07-1999 |
| | | | | KR | 207149 | B1 | 15-07-1999 |
| | | | | KR | 207148 | B1 | 15-07-1999 |
| | | | | NO | 971490 | A | 07-05-1997 |
| | | | | NO | 972044 | A | 02-05-1997 |
| | | | | PL | 319431 | A1 | 04-08-1997 |
| | | | | PL | 319952 | A1 | 01-09-1997 |
| | | | | RU | 2137822 | C1 | 20-09-1999 |
| | | | | RU | 2142982 | C1 | 20-12-1999 |
| | | | | SK | 41097 | A3 | 06-08-1997 |
| | | | | SK | 54497 | A3 | 10-09-1997 |

EPO FORM P0459

For more details about this annex : see Official Journal of the European Patent Office, No. 12/82

**ANNEX TO THE EUROPEAN SEARCH REPORT
ON EUROPEAN PATENT APPLICATION NO.**                    EP 05 10 4767

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2005

| Patent document cited in search report | | Publication date | Patent family member(s) | | Publication date |
|---|---|---|---|---|---|
| WO 9614389 | A | | US | 6255272 B1 | 03-07-2001 |
| | | | US | 5929015 A | 27-07-1999 |
| EP 0962424 | A | 08-12-1999 | AU | 748218 B2 | 30-05-2002 |
| | | | AU | 4374299 A | 30-12-1999 |
| | | | BR | 9910918 A | 17-04-2001 |
| | | | CA | 2334114 A1 | 16-12-1999 |
| | | | CN | 1127450 C | 12-11-2003 |
| | | | CZ | 20004538 A3 | 15-08-2001 |
| | | | WO | 9964350 A1 | 16-12-1999 |
| | | | IL | 139953 A | 19-06-2005 |
| | | | JP | 2002517371 T | 18-06-2002 |
| | | | MX | PA00012028 A | 14-05-2002 |
| | | | NZ | 508925 A | 28-08-2002 |
| | | | PL | 344642 A1 | 19-11-2001 |
| | | | RU | 2223910 C2 | 20-02-2004 |
| | | | TR | 200003594 T2 | 20-04-2001 |
| | | | TW | 458942 B | 11-10-2001 |
| | | | US | 6521583 B1 | 18-02-2003 |
| | | | ZA | 200006995 A | 07-01-2002 |
| GB 1538893 | A | 24-01-1979 | BE | 842014 A1 | 22-11-1976 |
| | | | DE | 2622610 A1 | 09-12-1976 |
| | | | FR | 2324574 A1 | 15-04-1977 |
| | | | IT | 1063355 B | 11-02-1985 |
| | | | LU | 72575 A1 | 10-02-1977 |
| GB 1300855 | A | 20-12-1972 | AT | 345250 B | 11-09-1978 |
| | | | AT | 23471 A | 15-01-1978 |
| | | | BE | 760508 A1 | 18-06-1971 |
| | | | CA | 936672 A1 | 13-11-1973 |
| | | | CH | 515851 A | 30-11-1971 |
| | | | DE | 2060971 A1 | 15-07-1971 |
| | | | ES | 387068 A1 | 01-05-1973 |
| | | | FI | 53962 B | 31-05-1978 |
| | | | FR | 2076430 A5 | 15-10-1971 |
| | | | NL | 7019007 A | 16-07-1971 |
| | | | NO | 131751 B | 14-04-1975 |
| | | | SE | 369405 B | 26-08-1974 |
| | | | ZA | 7008233 A | 29-09-1971 |
| CA 2170599 | A1 | 09-03-1995 | AT | 153637 T | 15-06-1997 |
| | | | AU | 6647894 A | 22-03-1995 |
| | | | BR | 9407374 A | 16-07-1996 |
| | | | CN | 1132499 A | 02-10-1996 |
| | | | CZ | 9600498 A3 | 17-07-1996 |

For more details about this annex : see Official Journal of the European Patent Office, No. 12/82

**ANNEX TO THE EUROPEAN SEARCH REPORT
ON EUROPEAN PATENT APPLICATION NO.**                    EP 05 10 4767

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2005

| Patent document cited in search report | Publication date | Patent family member(s) | Publication date |
|---|---|---|---|
| CA 2170599 A1 | | DE 4329205 A1 | 02-03-1995 |
| | | WO 9506615 A1 | 09-03-1995 |
| | | EP 0716640 A1 | 19-06-1996 |
| | | ES 2103589 T3 | 16-09-1997 |
| | | FI 960938 A | 25-04-1996 |
| | | HR 940483 A1 | 31-10-1996 |
| | | HU 73680 A2 | 30-09-1996 |
| | | JP 2801406 B2 | 21-09-1998 |
| | | JP 9501140 T | 04-02-1997 |
| | | KR 190471 B1 | 01-06-1999 |
| | | PL 313288 A1 | 24-06-1996 |
| | | SK 26796 A3 | 03-07-1996 |
| | | TR 28528 A | 30-09-1996 |
| | | ZA 9406621 A | 03-04-1995 |

EPO FORM P0459

**EP 1 728 762 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 1538893 A
- WO 9614389 A
- US 4526698 A
- WO 9735806 A
- GB 1300855 A
- US 6054066 A
- WO 0162663 A
- EP 04103014 A